# EUROPEAN PATENT APPLICATION

(11) **EP 2 119 562 A1**
(43) Date of publication of application: **18.11.2009**
(21) Application number: 07720324.8
(22) Date of filing: 05.03.2007
(51) Int. Cl.: B32B 27/08, B41M 3/02

(54) **METHOD FOR COVERING A PATTERN ON A SURFACE OF A VACUUM-MOLDED THREE-DIMENSIONAL ARTICLE**

(71) Applicant: Leng, Luhao, Xiamen Fujian 361009 (CN)
(72) Inventor: Leng, Luhao, Xiamen Fujian 361009 (CN)
(74) Representative: Verscht, Thomas Kurt Albert
(86) International application number: PCT/CN2007/000703
(87) International publication number: WO 2008/106820

(57) **Abstract**

A method for covering a pattern on a surface of a vacuum-molded three-dimensional article comprises the following steps: printing a desired pattern on a plastic film (30) by gravure printing; hot-pressing the printed plastic film (30) with a plastic board or sheet (10) so that the ink layer (20) of said pattern is formed between the plastic film (30) and the plastic board or sheet (10); forming the plastic board or sheet with the pattern into a desired three-dimensional shape by a hot-forming process.

## Description

### FIELD OF THE INVENTION

The present invention relates to a method for covering a pattern on a surface of a plastic article and more particularly, to a method for covering a pattern on a surface of a vacuum-molded three-dimensional article.

### BACKGROUND OF THE INVENTION

At present, methods for covering a pattern on a surface mainly includes water transferring, offset printing, PVC film vacuum-molded adhering, wood grain paper adhering, fire-proof board adhering or heat transfer etc.

Water transferring process is to cover a transfer film on an article, after the film dissolved, the pattern will remained on the article, then printing ink is coated to protect the pattern. But when dealing with an article with larger size and complex structure, the water transferring process can not be processed automatically, thus the efficiency is lower. Moreover, when the transfer film covered on the article by water-pressure, the pattern is easy to be distorted by many factors, thus the pattern has a lower fidelity, and the water transfer film is water-dissolvable film which has high cost.

PVC film vacuum-folded adhering process is to cover the pre-heated soft film on the articles with different shapes by gluing or pressure, this needs special film covering device, and the material used is PVC plastic which will pollute the environment in the recycle process and is harmful to the environment. The offset printing can only decorate the plane surface and can not decorate a surface with three-dimension. The wood grain paper adhering process and the fire-proof paper adhering process can not decorate to the complex curve surface in a high efficiency, the papers usually must be spelled together when the wood grainy papers and the fire-proof papers are used for decorating the complex curve surface,.

Heat transfer process need special heat-transfer device, and the ink can not be transferred to the article totally in the heat transferring process of the heat transfer pattern, thus affect the fidelity of the pattern, moreover, there is a parting agent layer on the surface of the ink of the heat transfer pattern, after being transferred, the pattern can not provide scratch resistance, solvent resistance, oil resistance capability for the furniture or building materials.

In summary, all afore-mentioned methods for covering a pattern on a surface has certain disadvantages respectively.

### SUMMARY OF THE INVENTION

The primary object of the present invention is to overcome the disadvantages existed in abovementioned method by providing a method for covering a pattern on a surface of a vacuum-molded three-dimensional article with high fidelity, high efficiency and friend to environment.

This object of the present invention is achieved by providing:

A method for covering a pattern on a surface of a vacuum-molded three-dimensional article comprises the following steps: 1) printing a desired pattern on a plastic film by gravure printing; 2) hot-pressing the printed plastic film with a plastic board or sheet so that the ink layer of said pattern is formed between the plastic film and the plastic board or sheet; 3) forming the plastic board or sheet with the pattern into a desired three-dimensional shape by a hot-forming process.

Aforementioned method for covering a pattern on a surface of a vacuum-molded three-dimensional article further comprises: after hot-pressing the printed plastic film with a plastic board or sheet, remove the plastic film from the surface of the plastic board or sheet, while the ink layer of pattern remained in the surface of the plastic board or sheet.

Or, after the hot-forming process for the plastic board or sheet, remove the plastic film from the surface of the plastic board or sheet, thus the ink layer of pattern will be remained in the surface of the plastic board or sheet.

And after the plastic film being removed from the surface of the plastic board or sheet, sprays varnish on the ink layer remained on the surface of the plastic board or sheet.

Said varnish can be thermo curing varnish or UV varnish.

According to aforementioned method for covering a pattern on a surface of a vacuum-molded three-dimensional article, said plastic film can be PP or PE film.

According to aforementioned method for covering a pattern on a surface of a vacuum-molded three-dimensional article, said plastic board or sheet can be ABS, PS, ASA, PMMA, PA or PC board or sheet.

According to aforementioned method for covering a pattern on a surface of a vacuum-molded three-dimensional article, said hot-pressing process is to hot-press the printed plastic film with a plastic board or sheet by the high temperature of the extruded plastic board or sheet and the pressure of the three-roller calender machine.

In summary, compared with prior art, the present invention has the following advantages: firstly, the present invention can produce three-dimensional plastic article with pattern on the surface, especially the surface of vacuum-molded board, because the vacuum-molded article having a larger area and lower cost; secondly, the hot-pressing is processed by the high temperature produced when the plastic board or sheet is extruded out, this process did not need special heat transfer device and parting agent, the device used here can only has simple structure, and the process having lower cost and high produce efficiency; thirdly, the pattern on the formed article has high fidelity and little distort; fourthly, because there is not any parting agent used here so that the common thermo curing varnish or UV curing varnish can be used according to requirement in the following process conveniently to improve the capability of scratch resistance /solvent resistance/ oil resistance, and did not need to use some special varnish which may affect the parting agent and has well adhering capability; fifthly, the material of PP or PE film is friend to the environment, thus avoid environment pollution in recycle.

### BRIEF DESCRIPTION OF THE DRAWINGS

FIG.1 is a view illustrates the method for covering a pattern on a surface, in which shows how the ink layer which formed the pattern is covered on the plastic sheet in the preferred embodiment of the invention;
FIG.2 depicts the process steps of hot-forming process of the plastic article in the preferred embodiment of the invention.

### DESCRIPTION OF THE PREFERRED EMBODIMENT

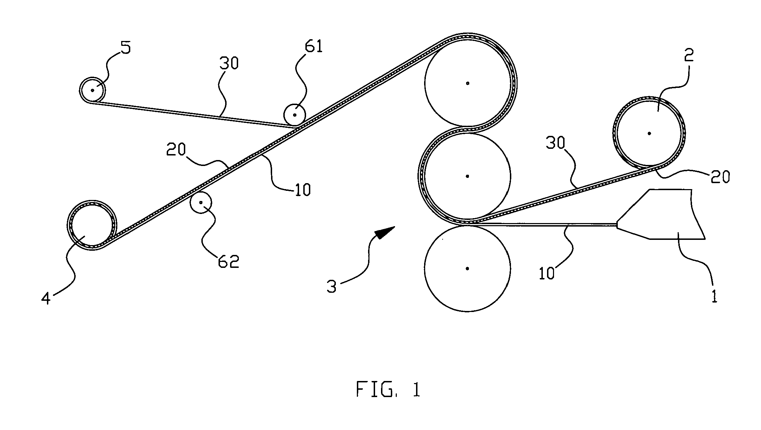

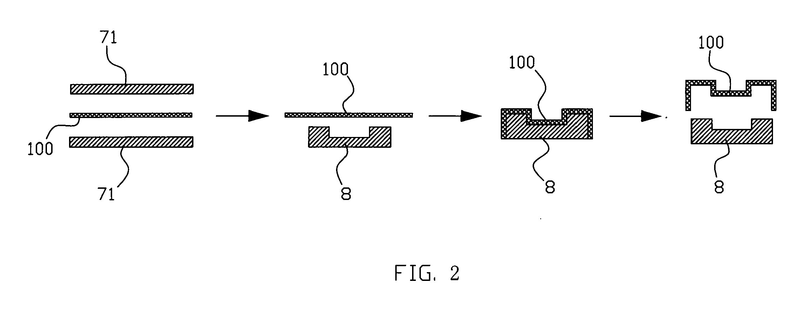

Embodiment 1 of the invention will now be described with reference to FIG.1 and FIG.2.

Referring to FIG.1, the device used in the method for covering a pattern on a surface in this embodiment mainly comprises an extruded cast film machine 1 for extruding out plastic sheet 10, a three-roller calender device 3 for hot-pressing the plastic film 30 having printed ink layer 20 with plastic sheet 10, and a plastic film uncoiling roller 2, a plastic film recoiling roller 5, a plastic sheet recoiling roller 4 and, a pressing roller 61 and a pressing roller 62 for assistance. Referring to FIG.2, the device used in hot-forming process in this embodiment mainly comprises a heat device 71 for heating the plastic sheet 100 with printed ink layer, mould 8 and pressing device. The pressing device is not shown in the figure.

Method for covering a pattern on a surface of a vacuum-molded three-dimensional article comprises the following steps: 1 ) printing a desired pattern on a plastic film 30 by gravure printing so as to form an ink layer 20 on the surface of the plastic film 30, and the plastic film 30 wrapped around the plastic film uncoiling roller 2; 2) hot-pressing the plastic film (30) having the printed ink layer 20 with a plastic sheet 10 extruded from the extruded cast film machine 1, this process mainly is to hot-press the printed plastic film 30 having the printed ink layer 20 with the plastic sheet 20 by the high temperature produced in the extruding of the plastic sheet and the pressure of the three-roller calender machine 3, therefore, the ink layer 20 which formed said pattern is pressed between the plastic film 30 and the plastic sheet 10; 3) Remove the plastic film 30 from the surface of the plastic sheet 10 by the pressing roller 61, while the ink layer 20 which formed the pattern remained on the surface of the plastic sheet 10, and the plastic film 30 is recoiled in the plastic film recoiling roll 5 and can be used next time; 4) spraying varnish ( thermo curing varnish or UV varnish) on the ink layer 20 remained on the surface of the plastic sheet 10; 5) the plastic sheet 100 with printed ink layer formed into a desired three-dimensional shape by hot-forming process by heat device 71, mould 8 and pressing device.

The aforementioned plastic film can be PP or PE film, and the aforementioned plastic board 10 or sheet can be ABS, PS, ASA, PMMA, PA or PC board or sheet. Aforementioned plastic sheet 10 also can be plastic board.

Embodiment 2, it is similar to embodiment 1, the main difference of this embodiment to embodiment 1 is that: the step of removing the plastic film 30 from the plastic sheet 10 and spraying varnish is set at the last step, i.e. after the plastic sheet 100 composited with plastic film 30 is formed to a desired three-dimensional shape by hot-forming process, remove the plastic film 30 from the surface of the formed three-dimension article, then spray the varnish at last, thus the ink layer 20 can be protected by the plastic film 30 in the hot-forming process.

### INDUSTRIAL APPLICABILITY

The present invention can produce three-dimensional plastic article with pattern on the surface, especially the surface of vacuum-molded board, because the vacuum-molded article having a larger area and lower cost; secondly, the hot-pressing is processed by the high temperature produced when the plastic board or sheet is extruded out, this process did not need special heat transfer device and parting agent, the device used here can only has simple structure, and the process having lower cost and high produce efficiency; thirdly, the pattern on the formed article has high fidelity and little distort; fourthly, because there is not any parting agent used here so that the common thermo curing varnish or UV curing varnish can be used according to requirement in the following process conveniently to improve the capability of scratch resistance /solvent resistance/ oil resistance, and did not need to use some special varnish which may affect the parting agent and has well adhering capability; fifthly, the material of PP or PE film is friend to the environment, thus avoid environment pollution in recycle.

It will be apparent to those skilled in the art that many changes and substitutions can be made to the preferred embodiment herein described without departing from the spirit and scope of the present invention as defined by the appended claims.

## Claims

1. A method for covering a pattern on a surface of a vacuum-molded three-dimensional article, comprising:
1) printing a desired pattern on a surface of a plastic film, wherein the adhering force between the printing ink and the film is smaller than the adhering force between printing ink and the plastic board or sheet;
2) hot-pressing the printed plastic film with a plastic board or sheet so that the ink layer of said pattern is formed between the plastic film and the plastic board or sheet;
3) forming the plastic board or sheet with the pattern into a desired three-dimensional shape by a hot-forming process.

2. The method for covering a pattern on a surface of a vacuum-molded three-dimensional article according to claim 1 further comprising: after hot-pressing the printed plastic film with a plastic board or sheet, remove the plastic film from the surface of the plastic board or sheet, while the ink layer of pattern remained in the surface of the plastic board or sheet.

3. The method for covering a pattern on a surface of a vacuum-molded three-dimensional article according to claim 1 further comprising: after the hot-forming process for the plastic board or sheet, remove the plastic film from the surface of the plastic board or sheet, thus the ink layer of pattern will be remained in the surface of the plastic board or sheet.

4. The method for covering a pattern on a surface of a vacuum-molded three-dimensional article according to claim 2 or 3 further comprising: after the plastic film being removed from the surface of the plastic board or sheet, sprays varnish on the ink layer remained on the surface of the plastic board or sheet.

5. The method for covering a pattern on a surface of a vacuum-molded three-dimensional article according to claim 4, wherein said varnish is thermo curing varnish or UV varnish.

6. The method for covering a pattern on a surface of a vacuum-molded three-dimensional article according to claim 1, wherein said plastic film is PP or PE film.

7. The method for covering a pattern on a surface of a vacuum-molded three-dimensional article according to claim 1, wherein said plastic board or sheet is ABS, PS, ASA, PMMA, PA or PC board or sheet.

8. The method for covering a pattern on a surface of a vacuum-molded three-dimensional article according to claim 1, wherein said hot-pressing process is to hot-press the printed plastic film with a plastic board or sheet by the high temperature of the extruded plastic board or sheet and the pressure of the three-roller calender machine.
